# EUROPEAN PATENT APPLICATION

(11) **EP 2 492 166 A2**
(43) Date of publication of application: **29.08.2012**
(21) Application number: 12156182.3
(22) Date of filing: 20.02.2012
(51) Int. Cl.: B62B 3/00, B62B 3/10, B62B 3/14, B62B 3/16, B62B 3/04

(54) **Trolley for transporting a stack of carpet tiles**

(30) Priority: 24.02.2011 NL 2006295
(71) Applicant: Desso B.V., 5142 PA Waalwijk (NL)
(72) Inventor: Stas, Wilhelmus Hendricus Maria, 5591 JV Heeze (NL); van Bergen, Jan Cornelis, 5384 HD Heesch (NL)
(74) Representative: van Oeffelt, Abraham

(57) **Abstract**

The present invention relates to a trolley (1) for transporting at least one stack (2,3) of carpet tiles, comprising a surface (4) for carrying the stacks (2,3) of carpet tiles, wheels (5,6,7,8), for supporting the surface (4), wherein the surface (4) for carrying the stacks (2,3) of carpet tiles is equipped with at least one opening (13-18,103,113-118), in particular a vertically extending through-hole, for each stack of carpet tiles.

## Description

The present invention comprises a trolley for transporting a stack of carpet tiles.

The cradle to cradle recycling process is becoming more and more incorporated in modern product life cycles. For the carpet industry this means, that upon replacement of a carpet or carpet tiles, the old carpet is not just thrown away or destroyed, but rather taken back by the carpet producer, for controlled separation into basic materials, such as filaments and backing parts, for the reuse during manufacture of new carpet.

In the case of one piece carpets of the size of an entire room, this is a rather orderly process, but in case of carpet tiles, it is desired to collect the old tiles in an orderly manner, so that they can easily be processed in a (partly) automated recycling process. Besides, the working process is speeded up when the old tiles can be removed quickly.

It is therefore a goal of the present invention to provide a solution to facilitate collecting old carpet tiles on an ordered and organised manner, to take a way the above objections, or at least to provide a useful alternative for the presently common approach.

The invention thereto proposes a trolley for transporting at least one stack of carpet tiles, comprising a surface for carrying the stacks of carpet tiles, wheels, for supporting the surface and at least one positioner, for positioning the at least one stack of tiles on the surface.

Evidently, a trolley in general provides the possibility of easy transport of items positioned on it. However, in the case of one or more stacks of carpet tiles, a correct positioning and straight stack are desired, in order to avoid stacks falling or losing tiles during transport. Neat stacks also take in the least space. After transport, well arranged stacks facilitate further processing of the removed tiles.

In order to be able to lift heavy stacks of tiles from the trolley the carrying surface may be equipped with a plurality of openings, in particular through-holes. The openings enable the possibility to raise the stack of tiles and lift it with a lifting device, for enabling them to be picked up with a forklift truck or a similar device.

Thereto, the surface for carrying the stacks of carpet tiles may be equipped with at least one opening, in particular a vertically extending through-hole, for each stack of carpet tiles. A more stable construction can be made when multiple openings are available for each stack of carpet tiles, for instance four openings for each stack of carpet tiles. Those openings may be are arranged essentially in a square or a rectangular shape, so that a lifting device can be inserted in between pairs of lifting pins in at least two directions.

An opening may for instance have a diameter between 5 and 20 cm, and in particular between 10 and 15 cm, so that a stable support can be ontained. The invention further relates to a lifting device for use in combination with a trolley according to any of the preceding claims, comprising a plurality of lifting pins, arranged such that they can be positioned through the openings in the carrying surface of the trolley, and extending essentially upright, an actuator, for moving the lifting pins between at least a first position, in which the lifting pins extend from a substrate less then the height from the surface to a lowest part of the carrying surface of the trolley, and a second position, in which the lifting pins extend from the substrate more than a height of the upper side of the carrying surface of the trolley measured from the substrate. The size of the pins may essentially match the size of opening placed on a device to lift the stack of carpet tiles from the carrying surface, or be somewhat smaller. For the ease of positioning they may be slightly tapered over at least a part of their hight, but for stable support of the tiles, an at least partly flat upper surface may be desired.

Due to the at least one positioner on the trolley according to the invention, not only stable and straight stacks are formed, but they are also arranged in the most effective manner. Besides determining the position of the stacked tiles, the positioners may further retain the carpet tiles on their arranged position. In a situation where the tiles are replaced by new ones, the trolley may also be used to supply the new tiles, loose or in boxes, to the location where they are to be placed.

Preferably, the at least one positioner is configured to position the tiles in at least two directions. These may for example be directions in the plane of the support, especially perpendicular directions. This assures that the at least one stack stays stable regardless of a transport direction.

In particular, the at least one positioner may comprise at least one stud, with a L or T-shaped cross section. Such forms are rigid, and enclose one or more edges that can be used to place a carpet tile against, for positioning the latter in two directions.

For positioning one stack of tiles, it may be preferential to make use of two studs with an L shaped cross section, which can be positioned such that one side of a tile fits exactly in between them. A topology where two L-shaped studs are arranged diagonally with respect to the tiles to be stacked is also thinkable. In case of two T-shaped studs, tiles can be stacked on both sides of the studs.

Since tiles may have a number of standardised formats, it can be advantageous when the at least one positioner is displaceable, for adapting the size of the tiles to be stacked. The positioners may in such case be configured for mutual placement at a distance of a number of standardised formats, for example 40 cm, 50 cm and 60 cm.

In order to be able to transport relatively high stacks of tiles, fasteners for the stacks of tiles may be applied, such as (flexible) belts. It may be desirable to mount multiple belts, wherein a first belt extends between a high end of a first and a second positioner, and a second belt, extends essentially perpendicular to the first belt. Herewith, a stable attachment can be obtained, in several directions.

When trolleys are not in use, or need to be transported to a location where they are to be loaded, they need to occupy the least space as possible. The trolleys may thereto be stackable, which can be arranged by providing their surface with recesses, for receiving wheels of a similar trolley. For stacking tiles on the surface however, these recesses do not hinder.

The trolley may further comprise storage means for the positioners, which can thereto be detachable from the trolley. The storage means may be arranged in such manner that the trolleys can be stacked, if the positioners are in their detached and stored position.

In an embodiment, the storage means comprise a shaft below the surface for carrying the stacks of tiles. In another embodiment, the storage means comprise a slit in the surface.

The invention will now be explained into more detail with reference to the following figures, wherein:
- Figure 1 shows a perspective top-view on a trolley according to the invention;
- Figure 2 shows a perspective bottom view on a trolley according to the invention;
- Figure 3 shows a perspective view on an alternative embodiment of a trolley according to the invention;
- Figure 4 shows a perspective view of a stack of trolleys according to the invention;
- Figure 5 shows the trolley from figure 1, in a perspective view from below;
- Figure 6 shows a trolley provided with openings for pins of a lifting device;
- Figure 7 shows a lifting device;
- Figure 8 shows the trolley from figure 6 and the lifting device from figure 7.

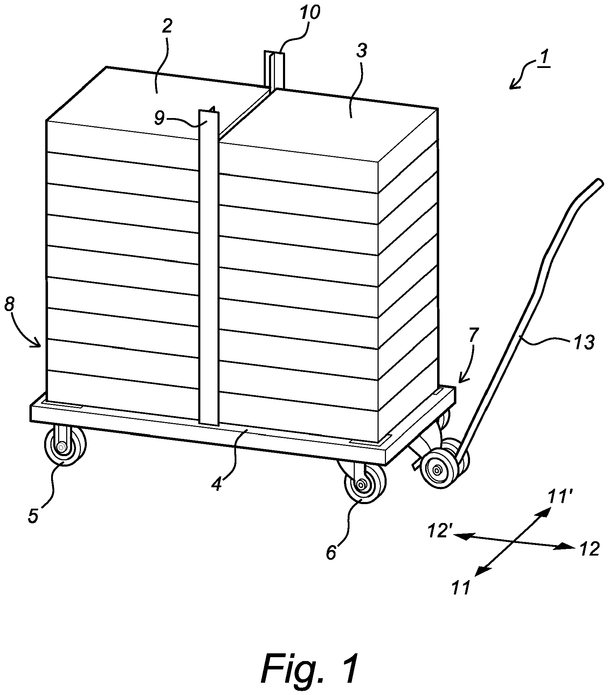

Figure 1 shows a trolley 1 according to the present invention, loaded with two stacks 2, 3 of carpet tiles, the trolley 1 comprising a surface 4 for carrying the stacks 2, 3 of carpet tiles, wheels 5, 6, 7, 8 for supporting the surface 4, and two positioners 9, 10, for positioning the stacks 2, 3 of tiles on the surface 4. The trolley can be pulled with the aid of a puller 11. The trolley 1 may comprise coupling means such as a hook or an eye for being pulled. The postioners 9, 10 are configured to position the tiles in at least two directions, indicated with 11 (and opposite 11') and 12 in figure 1. The positioners 9, 10 each comprise a stud with an L or T-shaped cross-section.

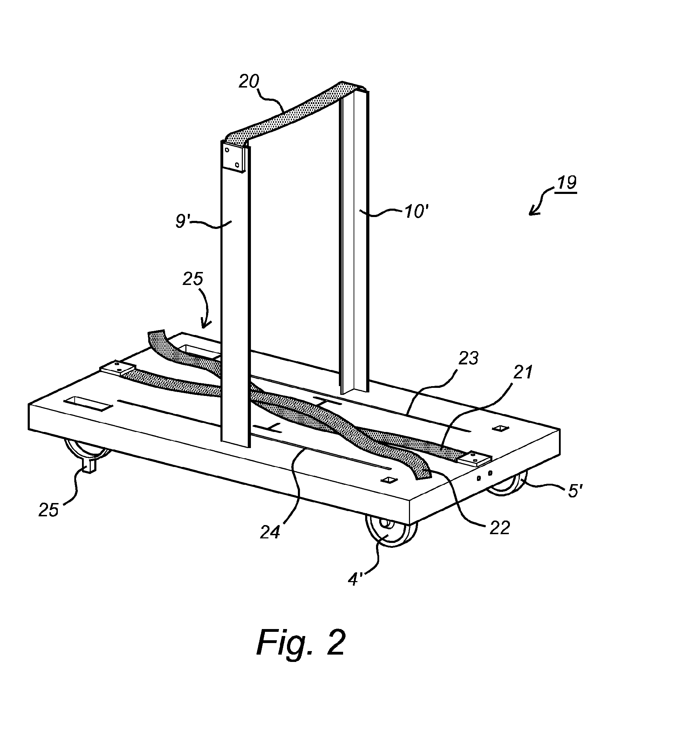

Figure 2 shows a different embodiment 19 of the trolley according to the invention. The trolley comprises fastening means 20, 21, 22 for fastening the stacks of tiles. The fastening means comprise multiple belts, wherein a first belt 20 extends between a high end of a first and a second positioner 9', 10', and two second belts 21, 22, extending essentially perpendicular to the first belt, when seen in the plane of the surface, so that stacks of carpet tiles (not depicted) are kept in place in two dimensions. Instead of four wheels, the surface is supported by two wheels 4' and 5', and two pins 25. The trolley 19 comprises storage means 23, 24 for the studs 9' and 10', formed by a slit in the surface.

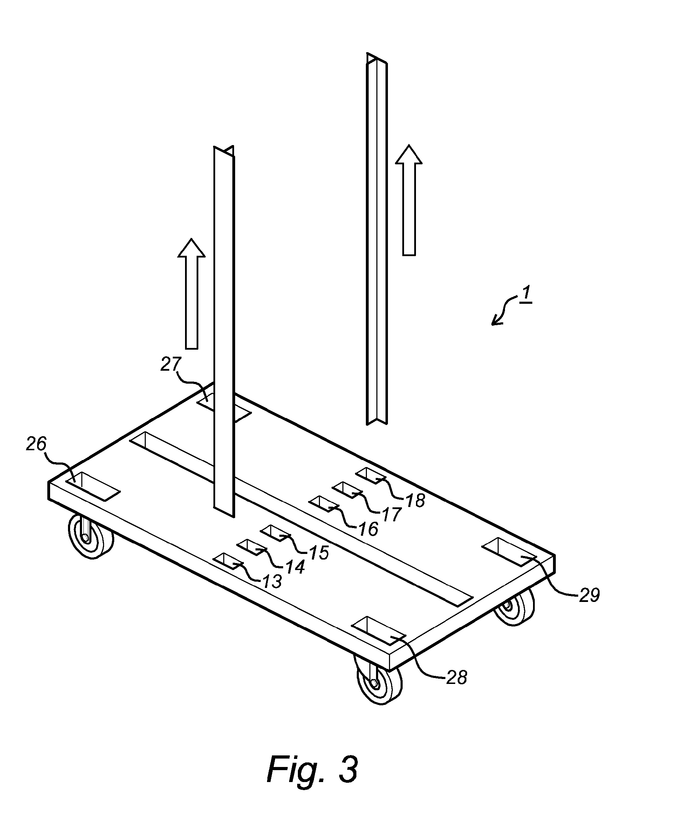

Figure 3 shows the trolley 1 from figure 1, wherein it can be seen that the positioners are displaceable, for adapting the size of the tiles to be stacked. For that purpose, position-holes 13-18 are provided in the surface 4. The surface furthermore comprises recesses 26-29, for receiving wheels of a similar trolley in order to stack the trolleys.

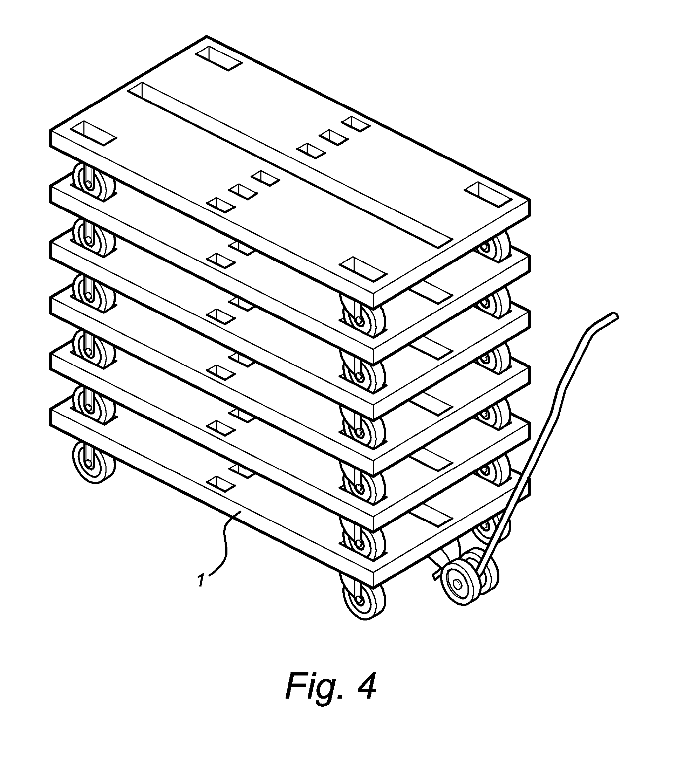

Figure 4 shows a stack of accordingly arranged trolleys.

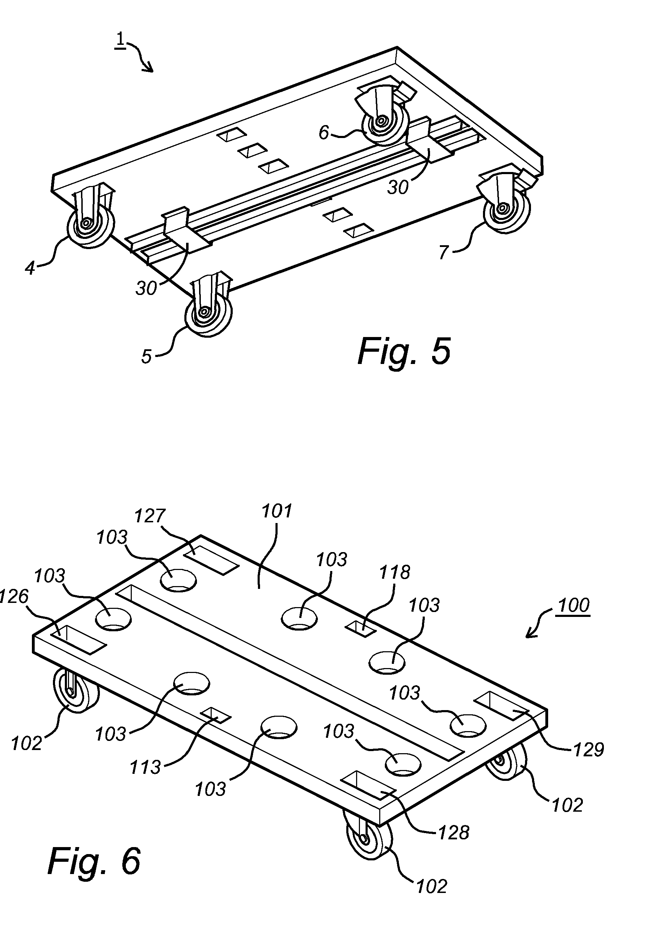

Figure 5 shows again trolley 1 from figure 1, now seen from a bottom side. The trolley also comprises storage means 31, for the positioners, but unlike the trolley 19 from figure 2, these storage means comprise a shaft below the surface for carrying the stacks of tiles.

Figure 6 shows a trolley 100 for transporting at least one stack of carpet tiles, comprising a surface 101 for carrying the stacks of carpet tiles, wheels 102, for supporting the surface 101, wherein the surface 101 for carrying the stacks of carpet tiles is equipped with openings 103, in particular vertically extending through-holes, in the example shown four for each stack of carpet tiles. The figure also shows optional position-holes 113-118 and optional recesses 126-129, for receiving wheels of a similar trolley in order to stack the trolleys.

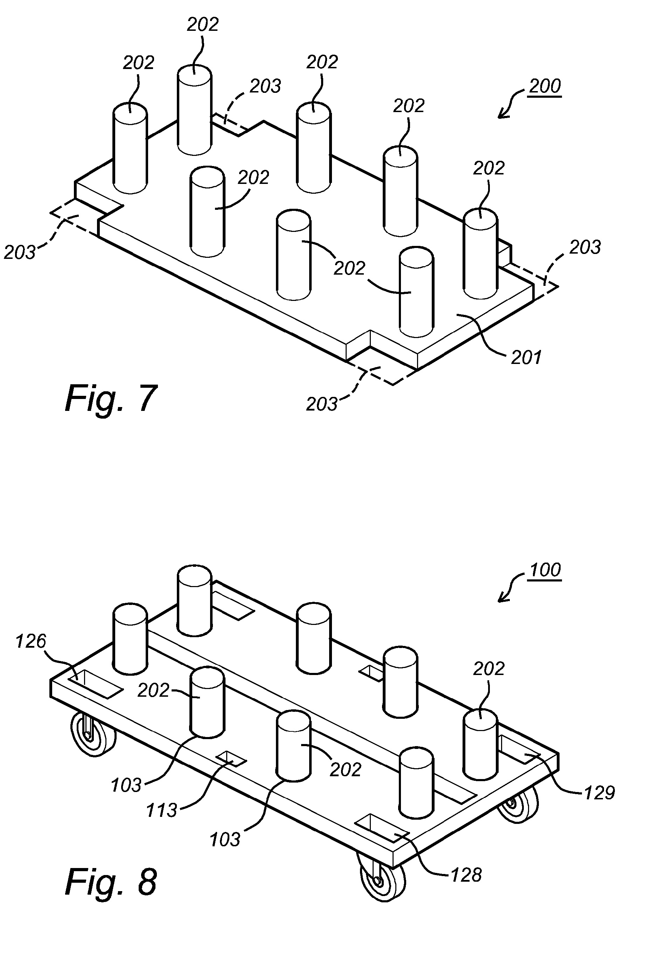

Figure 7 shows a lifting device for cooperation with the trolley 100 from figure 6. The lifting device comprises a base plate 201 having a plurality of lifting pins 202. The base plate has out-takes 203 at locations of the wheels 102 of the trolley 100, in order to prevent lifting the entire trolley. Furthermore an actuator (not shown) is present to lift the lifting device 200.

Figure 8 shows the trolley 100 from figure 6 and the lifting device 200 from figure 7. In use, a method to lift a stack of tiles from a trolley according to the present invention comprises the steps of placing a trolley 100 loaded with carpet tiles over a lifting device 200, and moving the lifting pins from a first position, in which the lifting pins extend from a substrate less then the height from the surface to a lowest part of the carrying surface of the trolley to a second position, in which the lifting pins extend from the substrate more than a height of the upper side of the carrying surface of the trolley measured from the substrate. The carpet tiles may then be taken from the lifting pins with an apparatus such as a hook or a fork, such as a fork of a forklift truck.

Besides the embodiments shown, multiple variations are possible to the embodiments, which are all regarded to fall within the scope of the invention, as defined in the following claims.

## Claims

1. Trolley for transporting at least one stack of carpet tiles, comprising:
- a surface for carrying the stacks of carpet tiles;
- wheels, for supporting the surface, wherein the surface for carrying the stacks of carpet tiles is equipped with at least one opening, in particular a vertically extending through-hole, for each stack of carpet tiles.

2. Trolley according to claim 1, comprising at least one positioner, for positioning the stacks of tiles on the surface.

3. Trolley according to claim 2, wherein multiple openings are available for each stack of carpet tiles.

4. Trolley according to claim 2, wherein four openings are available for each stack of carpet tiles.

5. Trolley according to claim 4, wherein the openings are arranged essentially in a square.

6. Trolley according to any of the preceding claims 2-5, wherein an opening has a diameter between 5 and 20 cm, and in particular between 10 and 15 cm.

7. Lifting device for use in combination with a trolley according to any of the preceding claims, comprising:
- a plurality of lifting pins, arranged such that they can be positioned through the openings in the carrying surface of the trolley, and extending essentially upright;
- an actuator, for moving the lifting pins between at least
- a first position, in which the lifting pins extend from a substrate less then the height from the surface to a lowest part of the carrying surface of the trolley; and
- a second position, in which the lifting pins extend from the substrate more than a height of the upper side of the carrying surface of the trolley measured from the substrate.

8. Lifting device according to claim 7, wherein the size of the pins essentially match the size of opening placed on a device to lift the stack of carpet tiles from the carrying surface.

9. Method to lift a stack of tiles from a trolley according to the present invention, comprising the steps of:
- Placing a trolley according to any of claims 1-6 loaded with carpet tiles over a lifting device according to any of claims 7 or 8;
- Moving the lifting pins from the first position to the second position.

10. Method according to claim 9, further comprising the step of:
- Taking the carpet tiles from the lifting pins with an apparatus such as a hook or a fork, such as a fork of a forklift truck.

11. Trolley according to any of the preceding claims, further comprising fastening means for fastening the stacks of tiles.

12. Trolley according to claim 11, wherein the fastening means comprise a belt.

13. Trolley according to claim 12, wherein the fastening means comprise multiple belts, wherein a first belt extends between a high end of a first and a second positioner, and a second belt, extending essentially perpendicular to the first belt.

14. Trolley according to any of the preceding claims, wherein the surface comprises recesses, for receiving wheels of a similar trolley in order to stack the trolleys.

15. Trolley according to any of the preceding claims, comprising storage means for the positioners, such as a shaft below the surface for carrying the stacks of tiles or a slit in the surface.
